# EUROPEAN PATENT APPLICATION

(11) **EP 4 636 104 A1**
(43) Date of publication of application: **22.10.2025**
(21) Application number: 24882797.4
(22) Date of filing: 23.10.2024
(51) Int. Cl.: C22B 26/12, C22B 1/02, C22B 3/32, C22B 3/22, H01M 10/54

(54) **METHOD FOR RECOVERING LITHIUM**

(30) Priority: 25.10.2023 KR 20230143673; 25.10.2023 KR 20230143674; 22.10.2024 KR 20240144577
(71) Applicant: LG Energy Solution, Ltd., Seoul 07335 (KR)
(72) Inventor: KWON, Ohsung, Daejeon 34122 (KR); KIM, Donghyeon, Daejeon 34122 (KR); YU, Hyemin, Daejeon 34122 (KR); LEE, Jeongbae, Daejeon 34122 (KR); NOH, Taechong, Daejeon 34122 (KR)
(74) Representative: Hoffmann Eitle
(86) International application number: PCT/KR2024/016133
(87) International publication number: WO 2025/089770

(57) **Abstract**

The present invention relates to a method of recovering lithium, the method including step (i) of heat-treating, at 220 to 280 °C, a waste cathode to which a cathode active material layer including a cathode material having an olivine structure, a binder, and carbon on a current collector is applied; or cathode active material layer powder obtained by crushing the waste cathode to recover the cathode material having an olivine structure in powder form; step (ii) of dissolving the recovered cathode material powder having an olivine structure in an aqueous acetic acid solution to prepare a cathode material solution; step (iii) of adding an aqueous hydrogen peroxide (H₂O₂) solution into the cathode material solution to obtain lithium-dissolved leachate and a leaching residue; step (iv) of separating the leachate and the leaching residue; and step (v) of concentrating the leachate, wherein, in step (ii), based on 1 mol of a cathode active material in the cathode material powder, the aqueous acetic acid solution contains 0.8 to 1.2 mol of acetic acid, and in step (iii), based on 1 mol of a cathode active material in the cathode material powder, the aqueous hydrogen peroxide solution contains 0.4 to 0.6 mol of hydrogen peroxide.

According to the present invention, cathode material powder may be easily obtained from a waste cathode having an olivine structure, and thus the recovery rate of lithium may be high. In addition, by preserving FePO₄ as a leaching residue and reusing FePO₄ as a raw material for lithium iron phosphate, productivity and economic efficiency may be greatly improved, a wastewater treatment process may be unnecessary, and eco-friendliness may be achieved.

## Description

### [Technical Field]

### [Cross-Reference to Related Applications]

This application claims priority to Korean Patent Application No. 10-2023-0143673, filed on October 25, 2023, Korean Patent Application No. 10-2023-0143674, filed on October 25, 2023, and Korean Patent Application No. 10-2024-0144577, re-filed on October 22, 2024, based on the priority of the above patents, in the Korean Intellectual Property Office, the disclosures of each of which are incorporated herein by reference.

The present invention relates to a method of recovering lithium, and more particularly, to an environmentally friendly lithium recovery method. According to the method of the present invention, by heat-treating, at low temperature, a waste cathode to which a cathode active material layer including a cathode material having an olivine structure, a binder, and carbon on a current collector is applied; or cathode active material layer powder obtained by crushing the waste cathode to recover the cathode material having an olivine structure in powder form, dissolving the recovered cathode material powder in a weakly acidic aqueous acetic acid solution, and adding an aqueous hydrogen peroxide solution thereto to selectively leach lithium, cathode material powder may be easily obtained from the waste cathode, and lithium may be recovered in a high yield. In addition, by preserving FePO₄ as a leaching residue and reusing FePO₄ as a raw material for lithium iron phosphate, productivity and economic efficiency may be greatly improved, and a wastewater treatment process may be unnecessary.

### [Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of used lithium-ion batteries is a very important technological challenge.

In general, a lithium-ion battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

A cathode accounts for more than 60 % of the cost of a lithium-ion battery. Lithium cobalt oxide (LiCoO₂) is used as the cathode because the lithium cobalt oxide has excellent reversibility, low self-discharge rate, high capacity, and high energy density, and is easy to synthesize. In addition, to reduce the use of expensive cobalt, lithium complex oxides containing Ni, Mn, and the like, such as lithium nickel cobalt manganese oxide (LiNiMnCoO₂), lithium manganese oxide (LiMnO₂), and lithium iron phosphate (LiFePO₄), are used. Since the cathode material contains about 5 to 7 % lithium, a method of recovering lithium from cathode materials of waste lithium-ion batteries is receiving significant attention.

In particular, lithium iron phosphate (LiFePO₄) has a very stable hexahedral crystal structure, and a wet method is used to break down this stable structure and recover valuable metals by using a high concentration of strong acid or strong base to obtain Li, Fe, and P as respective compounds. At this time, a large amount of toxic wastewater is generated, which causes environmental problems and increases production costs due to the cost of treating the wastewater.

Therefore, there is a need to develop an environmentally friendly lithium recovery method that can recover lithium in high yield from cathode materials with a very stable crystal structure of waste lithium-ion batteries, while reducing production costs.

### [Related Art Documents]

### [Patent Documents]

KR 2007-0112278 A

### [Disclosure]

### [Technical Problem]

Therefore, the present invention has been made in view of the above problems, and it is one object of the present invention to provide a method of recovering lithium. According to the method of present invention, by heat-treating a waste cathode or cathode active material layer powder obtained by crushing the waste cathode at low temperature to recover cathode material powder having an olivine structure, dissolving the recovered cathode material powder in a weakly acidic aqueous acetic acid solution, and then adding an aqueous hydrogen peroxide solution thereto to selectively leach lithium, the cathode material powder may be easily obtained from the waste cathode, and lithium may be recovered in a high yield. In addition, by preserving FePO₄ as a leaching residue and reusing FePO₄ as a raw material for lithium iron phosphate, productivity and economic efficiency may be greatly improved. In addition, since strong acid and strong base are not used, the method is environmentally friendly. Accordingly, since neutralization and wastewater treatment are unnecessary, process costs may be reduced.

The above and other objects can be accomplished by the present invention described below.

### [Technical Solution]

I) In accordance with one aspect of the present invention, provided is a method of recovering lithium, the method including (i) heat-treating, at 220 to 280 °C, a waste cathode to which a cathode active material layer including a cathode material having an olivine structure, a binder, and carbon on a current collector is applied; or cathode active material layer powder obtained by crushing the waste cathode to recover the cathode material having an olivine structure in powder form; (ii) dissolving the recovered cathode material powder having an olivine structure in an aqueous acetic acid solution to prepare a cathode material solution; (iii) adding an aqueous hydrogen peroxide (H₂O₂) solution into the cathode material solution to obtain lithium-dissolved leachate and a leaching residue; (iv) separating the leachate and the leaching residue; and (v) concentrating the leachate, wherein, in step (ii), based on 1 mol of a cathode active material in the cathode material powder, the aqueous acetic acid solution contains 0.8 to 1.2 mol of acetic acid, and in step (iii), based on 1 mol of a cathode active material in the cathode material powder, the aqueous hydrogen peroxide solution contains 0.4 to 0.6 mol of hydrogen peroxide.
II) According to I), the cathode material having an olivine structure may include lithium iron phosphate.
III) According to I) or II), the cathode material having an olivine structure may be a compound represented by Chemical Formula 1 below.

   [Chemical Formula 1] Li₁₊ₐFe_{1-b}M_{b}(PO_{4-c})X_{c}

   In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.
IV) According to I) to III), in step (i), the crushing may be performed using a hand-mill, a pin-mill, a disk-mill, a cutting-mill, a hammer-mill, a mixer, or a blender.
V) According to I) to IV), in step (i), the heat treatment may be performed for 30 minutes to 6 hours.
VI) According to I) to V), in step (i), the heat treatment may be performed in air or under an oxygen atmosphere.
VII) According to I) to VI), in step (ii), the aqueous acetic acid solution may have a pH of 2 to 3.5.
VIII) According to I) to VII), in step (iii), the aqueous hydrogen peroxide solution may be added in a split manner.
IX) According to I) to VIII), in step (iii), after addition of the aqueous hydrogen peroxide solution, the cathode material solution may have a pH of 3 to 5.5.
X) According to I) to IX), steps (ii) and (iii) may be performed at 35 to 70 °C.
XI) According to I) to X), in step (iv), separation of the leachate and the leaching residue may be performed using reduced pressure filtration.
XII) According to I) to XI), the method of recovering lithium may have a lithium recovery rate of 83 % by weight or more as calculated by Equation 1 below. Lithium recovery rate (wt%) = [Content (g) of lithium contained in leachate / Content (g) of lithium contained in cathode material powder recovered after heat treatment] × 100
XIII) According to I) to XII), the leaching residue of step (iv) may include FePO₄.
XIV) According to I) to XIII), in step (v), concentration of leachate may be performed by reduced pressure evaporation.
XV) According to I) to XIV), the method of recovering lithium may include concentrating the leaching residue obtained in step (iv) to obtain FePO₄.
XVI) According to I) to XV), the method of recovering lithium may include (iv-1) adding lithium to the obtained FePO₄ and performing calcination to prepare LiFePO₄, and (iv-2) adding carbon to the prepared LiFePO₄ and performing calcination.

### [Advantageous Effects]

According to the present invention, by heat-treating, at low temperature, a waste cathode to which a cathode active material layer including a cathode material having a very stable olivine structure, a binder, and carbon on a current collector is applied or cathode active material layer powder obtained by crushing the waste cathode to recover the cathode material having an olivine structure in powder form, dissolving the recovered cathode material powder in a weakly acidic aqueous acetic acid solution, adding an aqueous hydrogen peroxide solution thereto to selectively leach lithium, the cathode material powder can be easily obtained from the waste cathode, and lithium can be recovered in a high yield. In addition, by preserving FePO₄ as a leaching residue and reusing FePO₄ as a raw material for lithium iron phosphate, productivity and economic efficiency can be greatly improved.

In addition, since no strong acid or base is used for leaching, the amount of wastewater is reduced. Accordingly, process costs can be reduced, and eco-friendliness can be achieved.

### [Description of Drawings]

The following drawings attached to this specification illustrate embodiments of the present invention, and are presented to further understand the technical idea of the present invention in combination with the detailed description described below. Accordingly, the present invention is not limited to these drawings.
FIG. 1 is a flowchart for explaining a method of recovering lithium from a waste cathode, as one embodiment according to the present invention.
FIG. 2 is a flowchart for explaining a method of recovering lithium from a waste cathode, as another embodiment according to the present invention.

### [Best Mode]

The present inventors confirmed that, while studying a method of recovering lithium from a waste cathode containing a cathode material having a very stable olivine structure, when a waste cathode or cathode active material layer powder obtained by crushing the waste cathode was heat-treated at low temperature to thermally decompose carbon and a binder in the cathode active material layer to recover cathode material powder having an olivine structure, the recovered cathode material powder was dissolved in a weakly acidic aqueous acetic acid solution, and then an aqueous hydrogen peroxide solution was added thereto to selectively leach lithium, the cathode material powder was easily obtained from the waste cathode, and lithium was recovered in a high yield. In addition, FePO₄ was preserved in leaching residues. At this time, when FePO₄ was reused as a raw material for lithium iron phosphate, economic efficiency was greatly improved. In addition, since no strong acid or base was used, lithium was recovered in an environmentally friendly manner. Based on these results, the present inventors conducted further studies to complete the present invention.

Hereinafter, a method of recovering lithium according to the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recovering lithium

The method of recovering lithium according to the present invention includes step (i) of heat-treating, at 220 to 280 °C, a waste cathode to which a cathode active material layer including a cathode material having an olivine structure, a binder, and carbon on a current collector is applied; or cathode active material layer powder obtained by crushing the waste cathode to recover the cathode material having an olivine structure in powder form; step (ii) of dissolving the recovered cathode material powder having an olivine structure in an aqueous acetic acid solution to prepare a cathode material solution; step (iii) of adding an aqueous hydrogen peroxide (H₂O₂) solution into the cathode material solution to obtain lithium-dissolved leachate and a leaching residue; step (iv) of separating the leachate and the leaching residue; and step (v) of concentrating the leachate. In step (ii), based on 1 mol of a cathode active material in the cathode material powder, the aqueous acetic acid solution contains 0.8 to 1.2 mol of acetic acid. In step (iii), based on 1 mol of a cathode active material in the cathode material powder, the aqueous hydrogen peroxide solution contains 0.4 to 0.6 mol of hydrogen peroxide. In this case, cathode material powder may be easily obtained from a waste cathode, and thus high lithium recovery rate may achieved. In addition, FePO₄ as a leaching residue may be preserved, and FePO₄ may be reused as a raw material for lithium iron phosphate, thereby greatly improving economic efficiency. In addition, since no strong acid or base is used, eco-friendliness may be achieved. In addition, since neutralization and wastewater treatment are not required, process costs may be reduced.

Hereinafter, each step of the method of recovering lithium is described in detail.

### (i) Heat-treating, at 220 to 280 °C, a waste cathode to which a cathode active material layer including a cathode material having an olivine structure, a binder, and carbon on a current collector is applied; or cathode active material layer powder obtained by crushing the waste cathode to recover a cathode material having an olivine structure in powder form

The method of recovering lithium according to the present invention includes step (i) of heat-treating, at 220 to 280 °C, a waste cathode to which a cathode active material layer including a cathode material having an olivine structure, a binder, and carbon on a current collector is applied; or cathode active material layer powder obtained by crushing the waste cathode to recover the cathode material having an olivine structure in powder form. In this case, the cathode active material layer and the current collector may be easily separated, and thus the cathode active material layer may be obtained in powder form. In addition, lithium may be recovered in high yield in the subsequent leaching step.

In the present disclosure, the olivine structure is a type of cathode material structure, and refers to a structure in which phosphorus atoms and oxygen atoms are strongly bonded to a hexahedron with a 3D lattice structure. Since the structure may be maintained even when all lithium ions are lost, there is little performance degradation due to charge and discharge and the structure has excellent thermal stability. In addition, the above structure is economical because inexpensive iron is used instead of expensive cobalt metal, but the energy density, electrical conductivity, and lithium-ion diffusion are lower than those of other cathode materials.

The olivine structure may be confirmed by X-ray diffraction analysis (XRD).

For example, the cathode material having an olivine structure may include lithium iron phosphate. In this case, high-temperature stability, lifespan characteristics, and economic efficiency may be excellent.

For example, the lithium iron phosphate may be a compound represented by Chemical Formula 1 below. In this case, high-temperature stability, lifespan characteristics, and economic efficiency may be excellent.

[Chemical Formula 1] Li₁₊ₐFe_{1-b}M_{b}(PO_{4-c})X_{c}

In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.

The lithium iron phosphate may preferably include LiFePO₄ having an olivine structure. In this case, high-temperature stability, lifespan characteristics, and economic efficiency may be excellent.

The waste cathode may be preferably a cathode separated from a lithium secondary battery discarded after use, or a defective cathode sheet or cathode scrap generated in a process of manufacturing a lithium secondary battery, more preferably a cathode scrap remaining after blanking a cathode sheet to obtain a cathode plate. In this case, economic benefits may be achieved because expensive lithium, FePO₄, and the like may be recovered and recycled.

For example, in step (i), the crushing may be performed using a hand-mill, a pin-mill, a disk-mill, a cutting-mill, a hammer-mill, a mixer, or a blender, preferably a mixer. In this case, the waste cathode is chopped into pieces, so that the current collector and the cathode active material layer are separated, and the cathode active material layer may be easily obtained as powder. In addition, the binder and carbon may be sufficiently thermally decomposed in the subsequent heat treatment process, so that the recovery rate of lithium may be increased.

For example, the waste cathode of step (i) may be crushed into pieces having a size of 10 mm × 10 mm or less, preferably 7 mm × 7 mm or less, more preferably 5 mm × 5 mm or less, still more preferably 3 mm × 3 mm or less, still more preferably 0.1 to 3 mm × 0.1 to 3 mm or less. In this case, the waste cathode is chopped into pieces, so that the current collector and the cathode active material layer are separated, and the cathode active material layer may be easily obtained as powder.

In the present disclosure, '10 mm × 10 mm or less' includes (10 mm or less) × 10 mm, (10 mm) × (10 mm or less), and (10 mm or less) × (10 mm or less).

The crushed waste cathode may preferably undergo a step of separating the current collector and the cathode active material layer by sieving to obtain the cathode active material layer in powder form. In this case, the binder and carbon may be sufficiently removed in the subsequent heat treatment step.

For example, the sieving may be performed using a sieve of 120 to 250 mesh, preferably 140 to 240 mesh, more preferably 170 to 230 mesh, still more preferably 180 to 210 mesh. In this case, current collector pieces separated during the crushing process may be separated, and the size of the crushed cathode active material layer may be uniform. Accordingly, the binder and carbon may be sufficiently thermally decomposed in the subsequent heat treatment step, so that the cathode material may be easily obtained in powder form.

For example, in step (i), the heat treatment may be performed at 220 to 280 °C, preferably 230 to 280 °C, more preferably 240 to 280 °C, still more preferably 240 to 270 °C. Within this range, the carbon and binder may be thermally decomposed, and thus the cathode material having an olivine structure may be recovered as powder from the current collector, enabling lithium to be recovered in a high yield in the subsequent leaching step.

For example, in step (i), the heat treatment may be performed for 30 minutes to 6 hours, preferably 1 hour to 5.5 hours, more preferably 1 hour to 5 hours, still more preferably 1 hour to 4 hours, still more preferably 1 hour to 3 hours. Within this range, the carbon and binder may be thermally decomposed, and thus the cathode material having an olivine structure may be recovered as powder from the current collector, enabling lithium to be recovered in a high yield in the subsequent leaching step.

In the present disclosure, the heat treatment time is time of heat treatment performed at the corresponding heat treatment temperature, and does not include time required to reach the corresponding heat treatment temperature.

For example, in step (i), the heat treatment may be performed in air or under an oxygen atmosphere, preferably in air. In this case, the carbon and binder may be thermally decomposed, and thus the cathode material having an olivine structure may be easily recovered as powder from the current collector.

For example, the oxygen may have a purity of 59 % or more, preferably 80 % or more, more preferably 90 % or more, still more preferably 90 to 99 %. Within this range, the binder and carbon may be completely removed..

The purity (%) of oxygen may be volume% or mol%.

In the present disclosure, the purity of oxygen may be measured using a measurement method commonly used in the technical field to which the present invention belongs, without particular limitation.

The cathode material herein means a material including a cathode active material or is a cathode active material.

### (ii) Dissolving the recovered cathode material powder having an olivine structure in an aqueous acetic acid solution to prepare a cathode material solution

The method of recovering lithium according to the present invention includes step (ii) of dissolving the recovered cathode material powder having an olivine structure in an aqueous acetic acid solution to prepare a cathode material solution. In this case, lithium may be recovered in a high yield without using a strong acid or strong base, a wastewater treatment process may be unnecessary, and eco-friendliness may be achieved.

For example, in step (ii), based on 1 mol of a cathode active material in the cathode material powder, the aqueous acetic acid solution may include acetic acid in an amount of 0.8 to 1.2 mol, preferably 0.85 to 1.15 mol, more preferably 0.9 to 1.1 mol, still more preferably 0.95 to 1.05 mol. Within this range, the reaction between cathode material powder and acetic acid may occur smoothly.

In the present disclosure, 1 mol of the cathode active material is based on the cathode active material having an olivine structure in the cathode material powder.

In the present disclosure, the mole number of cathode active material in the cathode material powder may be measured by a measuring method commonly used in the technical field to which the present invention belongs. For example, ICP analysis may be used. Specifically, the mole number of cathode active material in the cathode material powder may be calculated based on the contents of Li, Fe, and P measured through ICP analysis.

For example, the aqueous acetic acid solution may have a pH of 2.0 to 3.5, preferably 2.5 to 3.5, more preferably 2.5 to 3.0. Within this range, the cathode material may be easily dissolved, thereby increasing the lithium recovery rate.

In the present disclosure, pH may be measured by a measurement method commonly used in the technical field to which the present invention belongs. Unless otherwise specified, pH may be measured using a general pH measuring device at room temperature. Specifically, Thermo Scientific Orion Star A Series may be used.

In the present disclosure, room temperature may be any point within the range of 20 ± 5 °C.

For example, the aqueous acetic acid solution may be an aqueous acetic acid solution having a molar concentration (mol/L) of 0.6 to 0.9, preferably 0.7 to 0.9, more preferably 0.75 to 0.85. Within this range, lithium may be recovered in a high yield without using a strong acid or base, and wastewater treatment is not required. Thus, eco-friendliness may be achieved.

For example, in step (ii), a weight ratio of the cathode material powder to the aqueous acetic acid solution may be 1:6 to 1:10, preferably 1:6.5 to 1:9.5, more preferably 1:7 to 1:9, still more preferably 1:7.5 to 1:8.5, still more preferably 1:7.5 to 1:8. Within this range, the cathode material powder may be easily dissolved in the aqueous acetic acid solution.

For example, step (ii) may be performed at 35 to 70 °C, preferably 40 to 65 °C, more preferably 45 to 60 °C, still more preferably 45 to 55 °C, still more preferably 47 to 52 °C. Within this range, the cathode material may be easily dissolved in the aqueous acetic acid solution.

For example, step (ii) may be performed while stirring. In this case, dissolution time may be shortened.

For example, the stirring speed may be 300 to 700 rpm, preferably 350 to 650 rpm, more preferably 400 to 600 rpm, still more preferably 450 to 550 rpm. Within this range, the cathode material may be easily dissolved in the aqueous acetic acid solution, and dissolution time may be shortened.

For example, the stirring time may be 10 to 60 minutes, preferably 20 to 50 minutes, more preferably 25 to 40 minutes. Within this range, the cathode material may be easily dissolved in the aqueous acetic acid solution, and dissolution time may be shortened.

### (iii) Obtaining leachate and leaching residue

The method of recovering lithium according to the present invention may include step (iii) of adding an aqueous hydrogen peroxide (H₂O₂) solution into the cathode material solution to obtain lithium-dissolved leachate and a leaching residue. In this case, since lithium is selectively leached into leachate, a high lithium recovery rate may be achieved. In addition, FePO₄ as a leaching residue may be preserved, and FePO₄ may be reused as a raw material for lithium iron phosphate, thereby greatly improving productivity and economic efficiency.

In the present disclosure, leaching refers to the process of dissolving soluble substances to remove solution and separate soluble and insoluble components.

In step (iii), the aqueous hydrogen peroxide solution acts as an oxidizer and facilitates the leaching of lithium from a cathode material.

For example, in step (iii), based on 1 mol of a cathode active material in the cathode material powder, the aqueous hydrogen peroxide solution may be used at a amount of hydrogen peroxide of 0.4 to 0.6 mol, preferably 0.4 to 0.55 mol, more preferably 0.45 to 0.55 mol, still more preferably 0.47 to 0.52 mol. Within this range, by selectively leaching lithium, lithium recovery rate may be increased. In addition, FePO₄ may be preserved as a leaching residue and may be reused as a raw material for lithium iron phosphate, thereby greatly improving productivity and economic efficiency.

In step (iii), the aqueous hydrogen peroxide solution may be preferably added in a split manner. More preferably, the aqueous hydrogen peroxide solution may be divided into three or more equal portions and added three or more times. Still more preferably, the aqueous hydrogen peroxide solution may be divided into three to seven equal portions and added three to seven times. Still more preferably, the aqueous hydrogen peroxide solution may be divided into four to six equal portions and added four to six times. In this case, the pH of the cathode material solution may change gradually, and lithium may be selectively and sufficiently leached.

For example, in step (iii), after the addition of the aqueous hydrogen peroxide solution, the cathode material solution may have a pH of 3 to 5.5, preferably 3.5 to 5.5, more preferably 4.0 to 5.0. Within this range, since no strong acid or base is used, wastewater treatment is not required. Accordingly, eco-friendliness may be achieved, and production costs may be reduced.

For example, step (iii) may be performed at 35 to 70 °C, preferably 40 to 65 °C, more preferably 45 to 60 °C, still more preferably 45 to 55 °C, still more preferably 47 to 52 °C. Within this range, the recovery rate of lithium may be greatly increased, and the leaching of Fe and P components may be significantly reduced.

For example, in step (iii), the weight ratio of the cathode material powder to the aqueous hydrogen peroxide solution may be 1:0.2 to 1:0.6, preferably 1:0.3 to 1:0.5, more preferably 1:0.3 to 1:0.4. Within this range, after the addition of the aqueous hydrogen peroxide solution, the pH of the cathode material solution may be maintained at 3.5 to 5.5. Thus, lithium may be selectively leached, and the recovery rate of lithium may be increased. In addition, since a wastewater treatment process is not required, eco-friendliness may be achieved, and production costs may be reduced.

For example, step (iii) may be performed while stirring. In this case, leaching time may be reduced.

For example, the stirring speed may be 300 to 700 rpm, preferably 350 to 650 rpm, more preferably 400 to 600 rpm, still more preferably 450 to 550 rpm. Within this range, lithium may be easily leached from the cathode material solution.

For example, the stirring time may be 0.5 hours or more, preferably 0.5 to 3 hours, more preferably 1 to 2.5 hours, still more preferably 1 to 2 hours, still more preferably 1.2 to 1.7 hours. Within this range, lithium may be sufficiently leached from the cathode material solution, and thus lithium may be recovered at a high yield.

For example, the reaction mechanism occurring in the dissolution step and the leaching step is as shown in Chemical Formula 2 below.

[Chemical Formula 2] LiFePO₄ + CH₃COOH + 0.5H₂O₂ ---> FePO₄ + Li⁺ + CH₃COO⁻+ H₂O

In Chemical Formula 2, the dissolved state of LiFePO₄ varies depending on the pH of a solution in which LiFePO₄ is dissolved. LiFePO₄ exists in the forms of Li⁺, Fe²⁺, and PO₄³⁻ at pH 2 or lower, in the forms of Li₃PO₄ and Fe³⁺ at pH 6 or higher, and in the forms of Li⁺ and FePO₄ at pH 2 to 6. In the present invention, the pH of the aqueous acetic acid solution that dissolves a cathode material is controlled to 2 to 3.5, and the aqueous hydrogen peroxide solution is added thereto as an oxidizer to oxidize Fe²⁺ to Fe³⁺, thereby facilitating leaching of lithium ions. In addition, the aqueous hydrogen peroxide solution is preferably continuously added so that the pH of the cathode material solution is within the range of 3 to 5.5. In addition, by performing leaching at 35 to 70 °C, lithium leaching may proceed more stably and sufficiently, thereby obtaining lithium with a high yield.

### (iv) Separating leachate and leaching residue

The method of recovering lithium according to the present invention may include step (iv) of separating the leachate and the leaching residue. In this case, lithium may be recovered in high yield from leachate, and FePO₄ may be preserved from a leaching residue and may be reused as a raw material for lithium iron phosphate, thereby improving productivity and economic efficiency.

For example, in step (e), the separation of the leachate and the leaching residue may be performed using reduced pressure filtration. In this case, the leachate and the leaching residue may be easily separated using a simple process, reducing process costs and providing the advantage of eco-friendliness.

The reduced pressure filtration may preferably be vacuum filtration, and specifically vacuum filtration using a filtration flask. In this case, the leachate and the leaching residue may be easily separated.

In the present disclosure, vacuum filtration commonly used in the technical field to which the present invention belongs may be used in the present invention without particular limitation. For example, vacuum filtration may include filtration under a partial vacuum or low pressure.

For example, the leaching residue may include FePO₄. In this case, the leaching residue may be reused as a raw material for lithium iron phosphate, so economic benefits and benefits of resource recycling may be obtained.

### (v) Concentrating leachate

The method of recovering lithium according to the present invention may include step (v) of concentrating the leachate. In this case, lithium may be easily recovered.

For example, in step (v), concentration of the leachate may be performed by reduced pressure evaporation, and as a specific example, reduced pressure evaporation of leachate may be performed directly without a separate cooling process. In this case, high-purity lithium may be obtained in a high yield.

For example, the reduced pressure evaporation may be performed at 70 to 90 °C and 5 to 20 mbar, preferably at 75 to 85 °C and 7 to 12 mbar. In this case, lithium may be recovered stably in a high yield within a short period of time.

For example, lithium may be recovered by concentrating the leachate, and the lithium may be recovered as lithium acetic acid. In this case, high-purity lithium may be obtained in a high yield.

For example, the method of recovering lithium may have a lithium recovery rate of 83 % by weight or more, preferably 87 % by weight or more, more preferably 90 % by weight or more, still more preferably 93 % by weight or more, still more preferably 95 % by weight or more, still more preferably 96 to 100 % by weight as calculated by Equation 1 below. Within this range, lithium may be selectively and sufficiently leached, and the leaching of iron (Fe) and phosphorus (P) components may be significantly reduced, so the economic efficiency may be excellent. Lithium recovery rate (wt%) = [Content (g) of lithium contained in leachate / Content (g) of lithium contained in cathode material powder recovered after heat treatment] × 100

In Equation 1, the content of lithium contained the leachate may be measured by any measurement method commonly used in the art to which the present invention belongs, for example, by ICP analysis. Specifically, 0.2 g of leachate is collected and placed in a conical tube. Then, the exact weight of the leachate is measured. Then, 0.1 ml of 70 % nitric acid is added thereto, 500 µl of 1000 mg/kg internal STD (Sc) is added thereto, and the volume of the mixture is adjusted to 50 ml with ultrapure water. Then, the lithium recovery rate is measured by ICP. At this time, when necessary, the sample concentration may be further diluted with ultrapure water to fall within the standard material calibration curve. In addition, in Equation 1, the content of lithium contained in the cathode active material layer powder recovered after heat treatment may be measured by ICP.

In addition, the method of recovering lithium according to the present invention may include a step of vacuum-drying the leaching residue obtained in step (iv) to obtain a compound including FePO₄. In this case, a raw material for lithium iron phosphate may be easily prepared, and thus resource recycling may be realized, and economic benefits may be significant.

For example, the vacuum drying may be performed at 120 to 150 °C, preferably 125 to 140 °C, more preferably 125 to 135 °C. Within this range, a compound including FePO₄ may be obtained within a short time.

In the present disclosure, vacuum drying methods commonly practiced in the technical field to which the present invention belongs may be used in the present invention without particular limitation.

The step of obtaining the compound including FePO₄ may preferably include step (iv-1) of adding lithium to the obtained FePO₄ and performing calcination to prepare LiFePO₄, and step (iv-2) of adding carbon to the prepared LiFePO₄ and performing calcination. In this case, lithium iron phosphate cathode material may be easily prepared, and thus resource recycling may be realized, and economic benefits may be significant.

For example, in step (iv-1), the calcination may be performed at 600 to 800 °C, preferably 650 to 750 °C. Within this range, lithium may be effectively incorporated into FePO₄.

For example, in step (iv-1), the calcination may be performed for 8 to 12 hours, preferably 9 to 11 hours, more preferably 9.5 to 10.5 hours. Within this range, lithium may be effectively incorporated into FePO₄.

For example, in step (iv-1), the calcination may be performed under an inert atmosphere, preferably under a nitrogen atmosphere. In this case, oxidation may be prevented.

For example, in step (iv-2), the calcination may be performed at 500 to 700 °C, preferably 550 to 650 °C. Within this range, the surface of LiFePO₄ may be coated with carbon to improve electrical conductivity.

For example, in step (iv-2), the calcination may be performed for 3 to 6 hours, preferably 4 to 5 hours, more preferably 3.5 to 4.5 hours. Within this range, due to carbon, the electrical conductivity of LiFePO₄ may be improved.

For example, in step (iv-2), the calcination may be performed under an inert atmosphere, preferably under a nitrogen atmosphere. In this case, oxidation may be prevented.

In the present disclosure, unless otherwise defined, the heat treatment may be performed at a temperature increase rate of 1 to 20 °C/min, preferably 3 to 10 °C/min until the corresponding heat treatment temperature is reached.

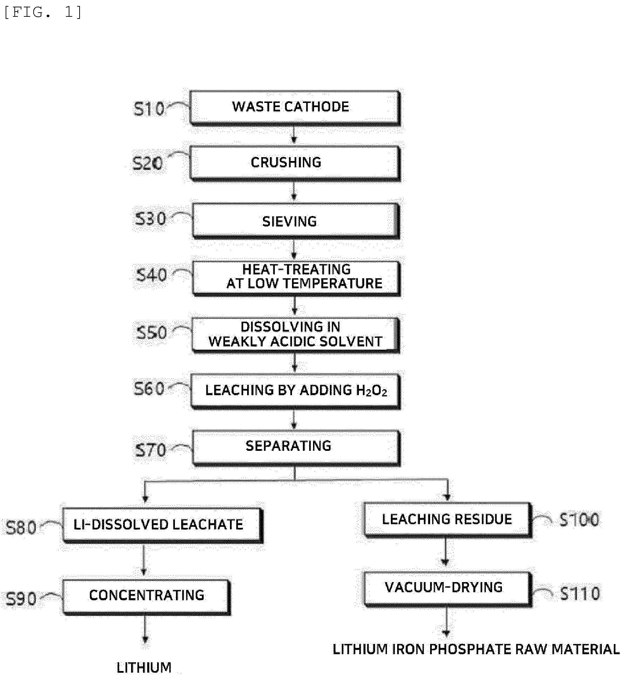

FIG. 1 below is a flowchart for a method of recovering lithium, as one embodiment according to the present invention.

Referring to FIG. 1, first, a waste cathode is prepared (step S10).

The waste cathode may be a discarded lithium-ion battery cathode, a defective product generated during a cathode coating process, or cathode scrap discarded after cutting an electrode plate, preferably a discarded lithium-ion battery cathode.

The cathode has a structure in which a cathode active material layer including a cathode material and carbon is combined by a binder on aluminum foil.

The cathode material may be a cathode material having an olivine structure, preferably lithium iron phosphate having an olivine structure, more preferably LiFePO₄ having an olivine structure. In this case, high-temperature stability, lifespan characteristics, and economic efficiency may be excellent.

Next, the prepared waste cathodes are crushed into pieces of appropriate sizes (step S20).

Here, the crushing includes cutting or shredding a cathode into easy-to-handle sizes. As a specific example, the crushed waste cathode may have a size of 5 mm × 5 mm. For example, the crushing may be performed using a dry crushing device such as a mixer, a blender, a hand-mill, a pin-mill, a disk-mill, a cutting-mill, and a hammer-mill, as a specific example, a mixer. In this case, the waste cathode is cut into small pieces so that the waste cathode may be easily separated into a current collector and a cathode active material layer. The pieces are uniformly heat-treated in the subsequent heat treatment step so that a binder and carbon in the cathode active material layer may be easily removed, which increases the lithium recovery rate.

Next, the crushed waste cathode is separated into a current collector and a cathode active material layer through sieving (step S30).

The crushed waste cathode in step 20 may be sieved using a sieve of 120 to 250 mesh, as a specific example, 200 mesh, to separate a current collector and obtain a cathode active material layer in powder form.

Next, the obtained cathode active material layer powder is heat-treated at low temperature to recover a cathode material having an olivine structure in powder form (step S40). Here, the heat treatment is performed to thermally decompose carbon and a binder within the cathode active material layer.

Through the heat treatment as described above, carbon and a binder inside the cathode are removed through thermal decomposition, and the cathode material is easily sorted into powder form.

For example, the heat treatment may be performed in air or under an oxygen atmosphere, as a specific example, in air. In this case, the binder and carbon are not carbonized but rather react with oxygen and are converted to gases such as CO and CO₂ and disappear, so both the binder and carbon are removed and the cathode material is recovered.

The heat treatment may preferably performed at 220 to 280 °C, as a specific example, 250 °C. When the heat treatment is performed at a temperature less than 220 °C, the binder is not easily removed. When the heat treatment is performed at a temperature greater than 280 °C, the binder is easily removed, but the lithium recovery rate is reduced.

The heat treatment may be performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to cathode scraps may be prevented.

The heat treatment may be performed until the binder and carbon are completely thermally decomposed. For example, the heat treatment may be performed for preferably 30 minutes or more, more preferably 30 minutes to 6 hours, as a specific example, 1 to 5 hours. Within this range, the binder and carbon may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, the recovered cathode material powder having an olivine structure is dissolved in an aqueous acetic acid solution to prepare a cathode material solution (step S50).

For example, based on 1 mol of a cathode active material in the cathode material powder, the aqueous acetic acid solution may be used in an amount corresponding to 0.8 to 1.2 mol of acetic acid, as a specific example, 1 mol of acetic acid. Within this range, the reaction between cathode material powder and acetic acid may occur smoothly.

For example, the aqueous acetic acid solution may have a pH of 2.0 to 3.5, as a specific example, a pH of 2.5 to 3.0. Within this range, a wastewater treatment process may be unnecessary, eco-friendliness may be achieved, and production costs may be reduced.

The aqueous acetic acid solution may have a molar concentration of preferably 0.6 to 0.9, as a specific example, 0.8. Within this range, cathode material powder may be easily dissolved. In addition, since no strong acid or base is used, wastewater treatment is unnecessary. Accordingly, eco-friendliness may be achieved, and process costs may be reduced.

For example, the weight ratio of the cathode material powder to the aqueous acetic acid solution may be 1:6 to 1:10, as a specific example, 1:8. Within this range, the cathode material powder may be easily dissolved in the aqueous acetic acid solution.

For example, the step of preparing a cathode material solution (S50) may be performed at 35 to 70 °C, as a specific example, 50 °C. Within this range, cathode material powder may be easily dissolved.

For example, the step of preparing a cathode material solution (S50) may be performed while stirring, as a specific example, while stirring at 500 rpm. In this case, the cathode material powder may be easily dissolved in the aqueous acetic acid solution, and thus dissolution time may be shortened.

For example, the stirring time may be 10 to 60 minutes, as a specific example, 30 minutes. Within this range, the cathode material powder may be easily dissolved in the aqueous acetic acid solution, and thus dissolution time may be shortened.

Next, an aqueous hydrogen peroxide (H₂O₂) solution is added to the cathode material solution to obtain lithium-dissolved leachate and a leaching residue (step S60).

For example, the aqueous hydrogen peroxide solution acts as an oxidizer and selectively leaches lithium from the cathode material solution.

For example, based on 1 mol of a cathode active material in the cathode material powder, the aqueous hydrogen peroxide solution may be used in an amount corresponding to 0.4 to 0.6 mol of hydrogen peroxide, as a specific example, an amount corresponding to 0.5 mol of hydrogen peroxide. Within this range, lithium may be selectively leached, thereby increasing the lithium recovery rate. In addition, FePO₄ may be preserved as a leaching residue and may be reused as a raw material for lithium iron phosphate, thereby greatly improving productivity and economic efficiency.

For example, the leaching step (S60) may be performed at 35 to 70 °C, as a specific example, 50 °C. Within this range, lithium may be selectively leached in high concentration, thereby increasing the lithium recovery rate. In addition, FePO₄ may be preserved as a leaching residue and may be reused as a raw material for lithium iron phosphate, thereby greatly improving productivity and economic efficiency.

For example, in leaching step (S60), the weight ratio of the cathode material powder to the aqueous hydrogen peroxide solution may be 1:0.2 to 1:0.6, specifically 1:0.3. Within this range, lithium may be selectively and sufficiently leached.

In leaching step (S60), the aqueous hydrogen peroxide solution may be preferably added in a split manner. As a specific example, the aqueous hydrogen peroxide solution may be divided into four equal portions and added four times. In this case, the pH of the cathode material solution may change gradually, and lithium may be selectively and sufficiently leached.

In leaching step (S60), after the addition of the aqueous hydrogen peroxide solution, the pH of the cathode material solution may be 3 to 5.5, as a specific example, 4 to 5. Within this range, lithium may be selectively and sufficiently leached, impurities may be reduced, and economic efficiency may be greatly improved. In addition, since no strong acid or base is used, wastewater treatment is not required. Accordingly, eco-friendliness may be achieved, and production costs may be reduced.

For example, the leaching may be performed while stirring, as a specific example, while stirring at 500 rpm. Within this range, lithium may be easily leached from the cathode material solution.

For example, the stirring time may be 0.5 hours or more, as a specific example, 1.5 hours. Within this range, lithium may be sufficiently leached from the cathode material solution, and thus lithium may be recovered at a high yield.

Next, the leachate and the leaching residue are separated (step S70).

The separation of the leachate and the leaching residue may be performed preferably by reduced pressure filtration. In this case, the leachate and the leaching residue may be easily separated using a simple process, process costs may be reduced, and eco-friendliness may be achieved.

Through the separation, the lithium-dissolved leachate (step S80) and the leaching residue (step S100) are obtained.

Next, the lithium-dissolved leachate is concentrated (step S90).

For example, the concentration of the leachate may be performed by reduced pressure evaporation. As a specific example, Li-dissolved leachate may be concentrated by reduced pressure evaporation without a separate cooling process. In this case, high-purity lithium may be obtained in a high yield.

For example, the reduced pressure evaporation may be performed at 70 to 90 °C and 5 to 20 mbar, as a specific example, at 80 °C and 10 mbar. In this case, high-purity lithium may be stably obtained in a high yield within a short time.

The leachate is concentrated to obtain lithium.

As an optional step, the separated leaching residue is subjected to vacuum drying to obtain a compound including FePO₄ (step S110).

The leaching residue may preferably include FePO₄. In this case, a raw material for lithium iron phosphate may be reused, and thus economic benefits may be increased.

For example, the vacuum drying may be performed at 120 to 150 °C, as a specific example, 130 °C. Within this range, a compound including FePO₄ may be obtained within a short time.

Specifically, the step S110 may include step i) of adding lithium to the obtained FePO₄ and performing calcination to prepare LiFePO₄, and step ii) of adding carbon to the prepared LiFePO₄ and performing calcination. In this case, a lithium iron phosphate cathode material may be easily prepared. Thus, resource recycling may be realized, and economic benefits may be significant.

In step i), calcination may be performed at 600 to 800 °C for 8 to 12 hours under an inert atmosphere. Within this range, lithium may be sufficiently incorporated into FePO₄ and be converted into LiFePO₄.

As a specific example, lithium may be added to the compound including FePO₄, and calcination may be performed at 700 °C for 10 hours under a nitrogen atmosphere. Within this range, lithium may be sufficiently incorporated into FePO₄ and be converted into LiFePO₄.

For example, in step ii), calcination may be performed at 500 to 700 °C for 3 to 6 hours under an inert atmosphere. Within this range, the electrical conductivity of LiFePO₄ may be improved.

As a specific example, carbon may be added to the calcinated LiFePO₄, and calcination may be performed at 600 °C for 4 hours under a nitrogen atmosphere. Within this range, the electrical conductivity of LiFePO₄ may be improved.

In the present disclosure, unless otherwise specified, the calcination atmosphere may be air, the pressure may be atmospheric pressure, and the temperature may be room temperature.

In the present disclosure, room temperature may be any point within the range of 20 ± 5 °C.

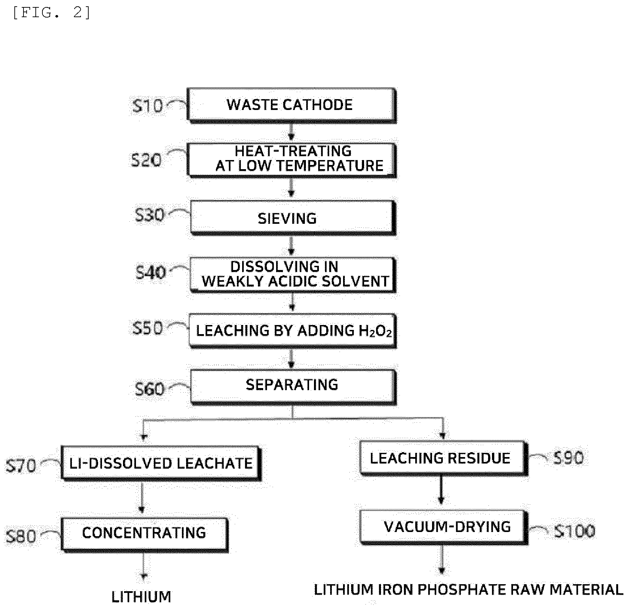

In addition, FIG. 2 below is a flowchart for another example of a method for recovering lithium according to the present invention.

Referring to FIG. 2, first, a waste cathode is prepared (step S10).

The waste cathode may be preferably a discarded lithium-ion battery cathode, a defective product generated during a cathode coating process, or cathode scraps discarded after cutting an electrode plate, preferably a discarded lithium-ion battery cathode.

The cathode has a structure in which a cathode active material layer including a cathode material and carbon is bonded to aluminum foil by a binder.

The cathode material may be a cathode material having an olivine structure, preferably lithium iron phosphate having an olivine structure, more preferably LiFePO₄ having an olivine structure. In this case, high-temperature stability, lifespan characteristics, and economic efficiency may be excellent.

Next, the waste cathode is heat-treated to obtain cathode material powder having an olivine structure (step S20). Here, heat treatment is performed to thermally decompose the carbon and binder inside the cathode.

Through the heat treatment as described above, carbon and binder inside the cathode are removed through thermal decomposition and the binder is removed, so the cathode material may be separated from the current collector, and the separated cathode material may be easily sorted in powder form.

For example, the heat treatment may be performed in air or under an oxygen atmosphere, as a specific example, in air. In this case, since the binder and carbon are not carbonized but react with oxygen and are converted to gases such as CO and CO₂ and disappear, both the binder and carbon may be removed, and at the same time, the cathode material is separated from the current collector.

The heat treatment may be performed at preferably 220 to 280 °C, as a specific example, 230 to 270 °C. When the heat treatment is performed at a temperature less than 220 °C, the binder may not be easily removed, and thus separation of the current collector is difficult. When the heat treatment is performed at a temperature above 280 °C, the lithium recovery rate may be reduced.

The heat treatment may be performed at a temperature increase rate of preferably 1 to 20 °C/min, more preferably 3 to 10 °C/min, as a specific example, 5 °C/min. Within this range, the heat treatment may be performed without putting a strain on heat treatment equipment, and thermal shock to cathode scraps may be prevented.

For example, the heat treatment may be performed for a period of time sufficient to allow sufficient thermal decomposition of the binder and carbon. Preferably, the heat treatment may be performed for 30 minutes or more, more preferably 30 minutes to 6 hours, as a specific example, 1 hour to 5 hours. Within this range, the binder and carbon may be thermally decomposed sufficiently, and thermal decomposition efficiency may be excellent.

For example, the heat treatment may be performed using various types of furnaces. For example, the heat treatment may be performed using a box-type furnace. Considering productivity, the heat treatment may be performed using a rotary kiln capable of continuous treatment.

After the heat treatment, slow or rapid cooling in air may be performed.

Next, the particle size of the recovered cathode material powder having an olivine structure is uniformed through sieving (step S30).

Tthe recovered cathode material powder after the heat treatment in step 20 may be preferably subjected to sieving. At this time, the sieving may be performed using a sieve of 120 to 250 mesh, as a specific example, 200 mesh. In this case, the subsequent leaching step may be performed easily.

Next, the recovered cathode material powder having an olivine structure is dissolved in an aqueous acetic acid solution to prepare a cathode material solution (step S40).

For example, based on 1 mol of a cathode active material in the cathode material powder, the aqueous acetic acid solution may be used in an amount corresponding to 0.8 to 1.2 mol of acetic acid, as a specific example, an amount corresponding to 1 mol of acetic acid. Within this range, the reaction between cathode material powder and acetic acid may occur smoothly.

For example, the aqueous acetic acid solution may have a pH of 2.0 to 3.5, as a specific example, pH 2.5 to 3.0. Within this range, a wastewater treatment process may be unnecessary, eco-friendliness may be achieved, and production costs may be reduced.

The concentration of the aqueous acetic acid solution may be preferably 0.6 to 0.9 mol, as a specific example, 0.8 mol. Within this range, cathode material powder may be easily dissolved. In addition, since no strong acid or base is used, wastewater treatment is unnecessary. Accordingly, eco-friendliness may be achieved, and process costs may be reduced.

For example, the weight ratio of the cathode material powder to the aqueous acetic acid solution may be 1:6 to 1:10, as a specific example, 1:8. Within this range, the cathode material powder may be easily dissolved in the aqueous acetic acid solution.

For example, the step (S40) of preparing a cathode material solution may be performed at 35 to 70 °C, as a specific example, 50 °C. Within this range, cathode material powder may be easily dissolved.

For example, the step (S40) of preparing a cathode material solution may be performed while stirring, as a specific example, while stirring at 500 rpm. In this case, the cathode material powder may be easily dissolved in an aqueous acetic acid solution, and thus dissolution time may be shortened.

Next, an aqueous hydrogen peroxide (H₂O₂) solution is added to the cathode material solution to obtain lithium-dissolved leachate and a leaching residue (step S50).

For example, the aqueous hydrogen peroxide solution acts as an oxidizer and selectively leaches lithium from the cathode material solution.

For example, based on 1 mol of a cathode active material in the cathode material powder, the aqueous hydrogen peroxide solution may be used in an amount corresponding to 0.4 to 0.6 mol of hydrogen peroxide, as a specific example, an amount corresponding to 0.5 mol of hydrogen peroxide. Within this range, lithium may be selectively leached, thereby increasing the lithium recovery rate. In addition, FePO₄ may be preserved as a leaching residue and may be reused as a raw material for lithium iron phosphate, thereby greatly improving productivity and economic efficiency.

For example, the leaching step (step S50) may be performed at 35 to 70 °C, as a specific example, 50 °C. Within this range, lithium may be selectively leached in high concentration, thereby increasing the lithium recovery rate. In addition, FePO₄ may be preserved as a leaching residue and may be reused as a raw material for lithium iron phosphate, thereby greatly improving productivity and economic efficiency.

For example, in the leaching step (step S50), the weight ratio of the cathode material powder to the aqueous hydrogen peroxide solution may be 1:0.2 to 1:0.6, specifically, 1:0.3. Within this range, lithium may be selectively and sufficiently leached.

In the leaching step (step S50), the aqueous hydrogen peroxide solution may be preferably added in a split manner. As a specific example, the aqueous hydrogen peroxide solution may be divided into four equal portions and added four times. In this case, the pH of the cathode material solution may change gradually, and lithium may be selectively and sufficiently leached.

In the leaching step (step S50), after the addition of the aqueous hydrogen peroxide solution, the cathode material solution may have a pH of 3 to 5.5, as a specific example, pH 4 to 5. Within this range, lithium may be selectively and sufficiently leached, impurities may be reduced, and economic efficiency may be greatly improved. In addition, since no strong acid or base is used, wastewater treatment is not required. Accordingly, eco-friendliness may be achieved, and production costs may be reduced.

For example, the leaching may be performed while stirring. As a specific example, the leaching may be performed while stirring at 500 rpm. Within this range, lithium may be easily leached from the cathode material solution.

For example, the stirring time may be 0.5 hours or more, as a specific example, 1.5 hours. Within this range, lithium may be sufficiently leached from the cathode material solution, and thus lithium may be recovered at a high yield.

Next, leachate and a leaching residue are separated (step S60).

The separation of the leachate and the leaching residue may be performed preferably using reduced pressure filtration. In this case, the leachate and the leaching residue may be easily separated using a simple process, reducing process costs and providing the advantage of eco-friendliness.

Through the separation, the lithium-dissolved leachate (step S70) and the leaching residue (step S90) are obtained.

Next, the lithium-dissolved leachate is concentrated (step S80).

For example, the concentration of the leachate may be performed using reduced pressure evaporation. As a specific example, Li-dissolved leachate may be concentrated directly using reduced pressure evaporation without a separate cooling process. In this case, high-purity lithium may be obtained in a high yield.

For example, the reduced pressure evaporation may be performed at 70 to 90 °C and 5 to 20 mbar, as a specific example, at 80 °C and 10 mbar. In this case, high-purity lithium may be stably obtained in a high yield within a short time.

The leachate may be concentrated to obtain lithium. At this time, lithium may be recovered as lithium acetic acid.

As an optional step, the separated leaching residue is vacuum-dried to obtain a compound containing FePO₄ (step S100).

The leaching residue may preferably include FePO₄. In this case, a raw material for lithium iron phosphate may be reused, and thus economic benefits may be increased.

For example, the vacuum drying may be performed at 120 to 150 °C, as a specific example, 130 °C. Within this range, a compound including FePO₄ may be obtained within a short time.

Specifically, step S100 may include step i) of adding lithium to the obtained FePO₄ and performing calcination to prepare LiFePO₄, and step ii) of adding carbon to the prepared LiFePO₄ and performing calcination. In this case, lithium iron phosphate cathode material may be easily prepared, resource recycling may be realized, and economic benefits may be significant.

In step i), the calcination may be performed at 600 to 800 °C for 8 to 12 hours under an inert atmosphere. Within this range, lithium may be sufficiently incorporated into FePO₄ and be converted into LiFePO₄.

As a specific example, lithium may be added to the compound including FePO₄, and calcination may be performed at 700 °C for 10 hours under a nitrogen atmosphere. Within this range, lithium may be sufficiently incorporated into FePO₄ and be converted into LiFePO₄.

For example, in step ii), the calcination may be performed at 500 to 700 °C for 3 to 6 hours under an inert atmosphere. Within this range, the electrical conductivity of LiFePO₄ may be improved.

As a specific example, carbon may be added to the calcinated LiFePO₄, and calcination may be performed at 600 °C for 4 hours under a nitrogen atmosphere. Within this range, the electrical conductivity of LiFePO₄ may be improved.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

A waste cathode in which a cathode active material layer including a cathode material having an olivine structure, a binder, and carbon was applied on a current collector was crushed into pieces of 5 mm × 5 mm in size using a mixer, and then was subjected to sieving using a sieve of 200 mesh to separate a current collector to obtain the cathode active material layer in powder form. The obtained cathode active material layer was heat-treated at 250 °C for 5 hours in air to thermally decompose carbon and a binder in the cathode active material layer to recover cathode material power (LiFePO₄) having an olivine structure. As a result of X-ray diffraction analysis (XRD), it was confirmed that the recovered cathode material powder was powder with an olivine structure.

12 g of the recovered cathode material powder (LiFePO₄) having an olivine structure was added to 96 ml of an aqueous acetic acid solution having a concentration of 0.8 mol/L and dissolved at 50 °C by stirring to prepare a cathode material solution. At this time, the pH of the aqueous acetic acid solution having a concentration of 0.8 mol/L was 2.5 to 3.0, and the aqueous acetic acid solution contained 1 mol of acetic acid based on 1 mol of the cathode active material in the cathode material powder. At this time, stirring was performed at 500 rpm for 30 minutes. The mole number of cathode active material in the cathode material powder was calculated from the Li, Fe, and P contents measured by ICP analysis.

While stirring at 50 °C, an aqueous H₂O₂ solution (30 wt%) was added for 1.5 hours 4 times in 1 ml each time to the prepared cathode material solution to obtain lithium-dissolved leachate and a leaching residue. At this time, stirring was performed at 500 rpm. At this time, based on 1 mol of a cathode active material in the cathode material powder, the aqueous hydrogen peroxide solution contained 0.5 mol of hydrogen peroxide.

The lithium-dissolved leachate and leaching residue were separated by reduced pressure filtration, and then the lithium-dissolved leachate was concentrated by reduced pressure evaporation without a separate cooling process to obtain lithium acetate.

The leaching residue was subjected to reduced pressure evaporation to obtain FePO₄.

### Example 2

The same procedure as Example 1 was performed, except that the heat treatment was performed for 1 hour.

### Comparative Example 1

The same procedure as Example 1 was performed, except that the heat treatment step was not performed.

### Comparative Example 2

The same procedure as Example 1 was performed, except that the heat treatment step was performed at 200 °C for 1 hour.

### Comparative Example 3

The same procedure as Example 1 was performed, except that the heat treatment step was performed at 200 °C for 5 hours.

### Comparative Example 4

The same procedure as Example 1 was performed, except that the heat treatment step was performed at 300 °C for 1 hour.

### Comparative Example 5

The same procedure as Example 1 was performed, except that the heat treatment step was performed at 300 °C for 5 hours.

### [Test Example I: Recovery rate of lithium, iron, and phosphorus and content of residual carbon]

ICP analysis was performed on the Li-dissolved leachate in Examples 1 and 2 and Comparative Examples 1 to 5 to measure the contents of lithium (Li), iron (Fe), and phosphorus (P). Then, the recovery rates of lithium (Li), iron (Fe), and phosphorus (P) were calculated using Equations 1 to 3 below, and the content of residual carbon (C) was measured through CS analysis. The results are shown in Table 1 below. Lithium recovery rate (wt%) = [Content (g) of lithium contained in leachate / Content (g) of lithium contained in cathode material powder recovered after heat treatment] × 100 Iron recovery rate (wt%) = [Content (g) of iron contained in leachate / Content (g) of iron contained in cathode material powder recovered after heat treatment] × 100 Phosphorus recovery rate (wt%) = [Content (g) of phosphorus contained in leachate / Content (g) of phosphorus contained in cathode material powder recovered after heat treatment] × 100

In Equation 1 to 3, when measuring the contents of lithium, iron, and phosphorus contained in leachate, 0.2 g of leachate was collected and placed in a conical tube. Then, the exact weight of the leachate was measured. Then, 0.1 ml of 70 % nitric acid was added thereto, 500 µl of 1000 mg/kg internal STD (Sc) was added thereto, and the volume of the mixture was adjusted to 50 ml with ultrapure water. Then, the contents of lithium, iron, and phosphorus were measured through ICP analysis.

In addition, according to Equations 1 to 3, the contents of lithium, iron, and phosphorus contained in cathode material powder recovered after heat treatment were measured through ICP analysis.

As the content of residual carbon, the content of carbon contained in cathode material powder recovered after heat treatment was measured through CS analysis. Specifically, after measuring the blank for the calibration curve, the carbon standard was measured at least three times. A crucible containing 10 mg of sample was added with a combustion agent, and the crucible was placed on the lower electrode of a CS analyzer. Then, the sample was injected into the upper part to perform combustion, and the content of carbon components was measured.

**[Table 1]**

| Classification | Heat treatment conditions | Content of residual carbon (% by weight) | Lithium recovery rate (wt%) | Iron recovery rate (wt%) | Phosphorus recovery rate (wt%) |
|---|---|---|---|---|---|
| Example 1 | 250 °C* 5 hours | 2.94 | 97.7 | 0.4 | 1.2 |
| Example 2 | 250 °C* 1 hour | 3.14 | 96.5 | 0.3 | 1.4 |
| Comparative Example 1 | Not performed | 3.26 | 93.8 | 0.5 | 1.7 |
| Comparative Example 2 | 200 °C* 1 hour | 3.24 | 80.3 | 0.3 | 1.1 |
| Comparative Example 3 | 200 °C* 5 hours | 3.20 | 93.0 | 0.4 | 1.7 |
| Comparative Example 4 | 300 °C* 1 hour | 2.91 | 79.2 | 0.3 | 0.7 |
| Comparative Example 5 | 300 °C* 5 hours | 2.70 | 72.5 | 1.0 | 0.1 |

As shown in Table 1, in the case of Examples 1 and 2 according to the present invention, compared to Comparative Examples 1 to 5, the lithium recovery rate was very high, and the recovery rate of iron and phosphorus was low.

In addition, in the case of Comparative Example 1 in which the heat treatment was not performed and Comparative Examples 2 and 3 in which the heat treatment was performed at 200 °C, the content of residual carbon was high.

In addition, in the case of Comparative Examples 2 and 3 in which the heat treatment was performed at 200 °C, the lithium recovery rate was low. In the case of Comparative Examples 4 and 5 in which the heat treatment was performed at 300 °C, the Li recovery rate was significantly reduced due to oxidation of Fe.

### [Additional Examples]

### Additional Example 1

A waste cathode in which a cathode active material layer including a cathode material having an olivine structure, a binder, and carbon was applied on a current collector was heat-treated at 230 °C for 1 hour in air to thermally decompose carbon and a binder in the cathode to obtain cathode material powder (LiFePO₄) having an olivine structure from the current collector. As a result of X-ray diffraction analysis (XRD), it was confirmed that the recovered cathode material powder was powder with an olivine structure.

The recovered cathode material powder having an olivine structure was sieved using a sieve of 200 mesh.

12 g of the sieved cathode material powder (LiFePO₄) having an olivine structure was added to 96 ml of an aqueous acetic acid solution having a concentration of 0.8 mol/L and dissolved by stirring at 50 °C to prepare a cathode material solution. At this time, the pH of the aqueous acetic acid solution having a concentration of 0.8 mol/L was 2.5 to 3.0. Based on 1 mol of a cathode active material in the cathode material powder, the aqueous acetic acid solution contained 1 mol of acetic acid. At this time, the stirring was performed at 500 rpm for 30 minutes.

While stirring at 50 °C, an aqueous H₂O₂ solution (30 wt%) was added for 1.5 hours 4 times in 1 ml each time to the prepared cathode material solution to obtain lithium-dissolved leachate and a leaching residue. At this time, stirring was performed at 500 rpm. At this time, based on 1 mol of a cathode active material in the cathode material powder, the aqueous hydrogen peroxide solution contained 0.5 mol of hydrogen peroxide.

The lithium-dissolved leachate and leaching residue were separated by reduced pressure filtration, and then the lithium-dissolved leachate was concentrated by reduced pressure evaporation without a separate cooling process to obtain lithium acetate.

The leaching residue was subjected to reduced pressure evaporation to obtain FePO₄.

### Additional Example 2

The same procedure as Additional Example 1 was performed, except that the heat treatment was performed for 5 hours.

### Additional Example 3

The same procedure as Additional Example 1 was performed, except that the heat treatment was performed at 250 °C for 1 hour.

### Additional Example 4

The same procedure as Additional Example 1 was performed, except that the heat treatment was performed at 250 °C for 5 hours.

### Additional Example 5

The same procedure as Additional Example 1 was performed, except that the heat treatment was performed at 270 °C for 1 hour.

### Additional Example 6

The same procedure as Additional Example 1 was performed, except that the heat treatment was performed at 270 °C for 5 hours.

### Additional Comparative Example 1

The same procedure as Additional Example 1 was performed, except that the heat treatment was performed at 200 °C for 1 hour.

### Additional Comparative Example 2

The same procedure as Additional Example 1 was performed, except that the heat treatment was performed at 200 °C for 5 hours.

### Additional Comparative Example 3

The same procedure as Additional Example 1 was performed, except that the heat treatment was performed at 300 °C for 1 hour.

### Additional Comparative Example 4

The same procedure as Additional Example 1 was performed, except that the heat treatment was performed at 300 °C for 5 hours.

### [Additional Test Example I: Recovery rates of lithium, iron, and phosphorus]

ICP analysis was performed on the Li-dissolved leachate in Additional Examples 1 to 6 and Additional Comparative Examples 1 to 4 to measure the contents of lithium (Li), iron (Fe), and phosphorus (P). Then, the recovery rates of lithium (Li), iron (Fe), and phosphorus (P) were calculated using Equations 1 to 3, and the results are shown in Table 2 below.

In Equation 1 to 3, when measuring the contents of lithium, iron, and phosphorus contained in leachate, 0.2 g of leachate was collected and placed in a conical tub. Then, the exact weight of the leachate was measured. Then, 0.1 ml of 70 % nitric acid was added thereto, 500 µl of 1000 mg/kg internal STD (Sc) was added thereto, and the volume of the mixture was adjusted to 50 ml with ultrapure water. Then, the contents of lithium, iron, and phosphorus were measured through ICP analysis.

In addition, according to Equations 1 to 3, the contents of lithium, iron, and phosphorus contained in cathode material powder recovered after heat treatment were measured through ICP analysis.

**[Table 2]**

| Classification | Heat treatment conditions | Lithium recovery rate (wt%) | Iron recovery rate (wt%) | Phosphorus recovery rate (wt%) |
|---|---|---|---|---|
| Additional Example 1 | 230 °C* 1 hour | 91.4 | 0.6 | 1.8 |
| Additional Example 2 | 230 °C* 5 hours | 87.9 | 0.5 | 1.7 |
| Additional Example 3 | 250 °C* 1 hour | 95.4 | 0.4 | 1.4 |
| Additional Example 4 | 250 °C* 5 hours | 96.5 | 0.4 | 1.1 |
| Additional Example 5 | 270 °C* 1 hour | 96.3 | 0.3 | 1.1 |
| Additional Example 6 | 270 °C* 5 hours | 88.8 | 0.4 | 1.1 |
| Additional Comparative Example 1 | 200 °C* 1 hour | - | - | - |
| Additional Comparative Example 2 | 200 °C* 5 hours | - | - | - |
| Additional Comparative Example 3 | 300 °C* 1 hour | 78.2 | 0.4 | 0.8 |
| Additional Comparative Example 4 | 300 °C* 5 hours | 66.5 | 0.5 | 0.1 |

As shown in Table 2, in the case of Additional Examples 1 to 6 according to the present invention, compared to Additional Comparative Examples 1 to 4, the lithium recovery rate was very high, and the recovery rates of iron and phosphorus were low.

In addition, in the case of Additional Comparative Examples 1 and 2 in which the heat treatment was performed at 200 °C, since the binder was not thermally decomposed, cathode material powder could not be recovered from a current collector. In the case of Additional Comparative Examples 3 and 4 in which the heat treatment was performed at 300 °C, the Li recovery rate was reduced due to oxidation of Fe.

## Claims

1. A method of recovering lithium, comprising:
(i) heat-treating, at 220 to 280 °C, a waste cathode to which a cathode active material layer comprising a cathode material having an olivine structure, a binder, and carbon on a current collector is applied; or cathode active material layer powder obtained by crushing the waste cathode to recover the cathode material having an olivine structure in powder form;
(ii) dissolving the recovered cathode material powder having an olivine structure in an aqueous acetic acid solution to prepare a cathode material solution;
(iii) adding an aqueous hydrogen peroxide (H₂O₂) solution into the cathode material solution to obtain lithium-dissolved leachate and a leaching residue;
(iv) separating the leachate and the leaching residue; and
(v) concentrating the leachate,
wherein, in step (ii), based on 1 mol of a cathode active material in the cathode material powder, the aqueous acetic acid solution contains 0.8 to 1.2 mol of acetic acid, and
in step (iii), based on 1 mol of a cathode active material in the cathode material powder, the aqueous hydrogen peroxide solution contains 0.4 to 0.6 mol of hydrogen peroxide.

2. The method according to claim 1, wherein the cathode material having an olivine structure comprises lithium iron phosphate.

3. The method according to claim 1, wherein the cathode material having an olivine structure is a compound represented by Chemical Formula 1 below.
[Chemical Formula 1] Li₁₊ₐFe_{1-b}M_{b}(PO_{4-c})X_{c} ,
wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, and c are -0.5≤a≤0.5, 0≤b≤0.5, and 0≤c≤0.1, respectively.

4. The method according to claim 1, wherein, in step (i), the crushing is performed using a hand-mill, a pin-mill, a disk-mill, a cutting-mill, a hammer-mill, a mixer, or a blender.

5. The method according to claim 1, wherein, in step (i), the heat treatment is performed for 30 minutes to 6 hours.

6. The method according to claim 1, wherein, in step (i), the heat treatment is performed in air or under an oxygen atmosphere.

7. The method according to claim 1, wherein, in step (ii), the aqueous acetic acid solution has a pH of 2.0 to 3.5.

8. The method according to claim 1, wherein, in step (iii), the aqueous hydrogen peroxide solution is added in a split manner.

9. The method according to claim 1, wherein, in step (iii), after addition of the aqueous hydrogen peroxide solution, the cathode material solution has a pH of 3 to 5.5.

10. The method according to claim 1, wherein steps (ii) and (iii) are performed at 35 to 70 °C.

11. The method according to claim 1, wherein, in step (iv), separation of the leachate and the leaching residue is performed using reduced pressure filtration.

12. The method according to claim 1, wherein the method of recovering lithium has a lithium recovery rate of 83 % by weight or more as calculated by Equation 1 below. Lithium recovery rate (wt%) = [Content (g) of lithium contained in leachate / Content (g) of lithium contained in cathode material powder recovered after heat treatment] × 100

13. The method according to claim 1, wherein the leaching residue of step (iv) comprises FePO₄.

14. The method according to claim 1, wherein, in step (v), concentration of leachate is performed by reduced pressure evaporation.

15. The method according to claim 1, comprising concentrating the leaching residue obtained in step (iv) to obtain FePO₄.

16. The method according to claim 15, comprising (iv-1) adding lithium to the obtained FePO₄ and performing calcination to prepare LiFePO₄, and (iv-2) adding carbon to the prepared LiFePO₄ and performing calcination.
